Europäisches Patentamt

European Patent Office

Office européen des brevets

(19)

(11) Veröffentlichungsnummer: **0 209 883 B1**

(12)  **EUROPÄISCHE PATENTSCHRIFT**

(45) Veröffentlichungstag der Patentschrift: 08.01.92

(51) Int. Cl.⁵: **F16F 13/00, B60K 5/12**

(21) Anmeldenummer: 86110017.0

(22) Anmeldetag: 21.07.86

(54) Zweikammer-Motorlager mit hydraulischer Dämpfung.

(30) Priorität: 25.07.85 DE 3526686

(43) Veröffentlichungstag der Anmeldung:
28.01.87 Patentblatt 87/05

(45) Bekanntmachung des Hinweises auf die
Patenterteilung:
08.01.92 Patentblatt 92/02

(84) Benannte Vertragsstaaten:
DE FR GB IT SE

(56) Entgegenhaltungen:
EP-A- 0 040 290          EP-A- 0 072 262
EP-A- 0 154 828          FR-A- 2 547 378
GB-A- 2 137 727          US-A- 4 159 091

PATENT ABSTRACTS OF JAPAN, Band 9, Nr.
294 (M-431)[2017], 20. November 1985; & JP-
A-60 132 145 (BRIDGESTONE K.K.) 15-07-1985

(73) Patentinhaber: METZELER GIMETALL AG
Gneisenaustrasse 15
W-8000 München 50(DE)

(72) Erfinder: Andrä, Rainer, Dr.
Dehrner Strasse 10
W-6250 Limburg 5(DE)
Erfinder: Hofmann, Manfred
Gerhard von Dietz-Strasse 15
W-6257 Hünfelden(DE)

(74) Vertreter: Michelis, Theodor, Dipl.-Ing. et al
Seibert + Michelis Rechtsanwälte und Patentanwälte Tattenbachstrasse 9
W-8000 München 22(DE)

## Beschreibung

Die Erfindung bezieht sich auf ein Zweikammer-Motorlager mit hydraulischer Dämpfung, dessen mit einer Flüssigkeit gefüllte und gummielastische Umfangswände aufweisende Kammern über einen, in einer starren Zwischenplatte angeordneten Kanal miteinander in Verbindung stehen und bei dem die Zwischenplatte eine beiderseitig von Flüssigkeit beaufschlagte und parallel zur Richtung eingeleiteter Schwingungen bewegliche Membranscheibe aus gummielastischem Material kammerartig umschließt.

Ein derartiges hydraulisch gedämpftes Motorlager ist aus der EP-A-0040290 bekannt, in dessen Zwischenplatte eine plattenförmige, ebene Membran mit einer verdickten Umfangswulst eingespannt ist. Diese Membran sperrt einen Flüssigkeitsaustausch zwischen den beiden Kammern vollständig ab. Darüber hinaus weist sie nur eine relativ geringe Beweglichkeit auf, da dicht oberhalb und unterhalb der Membran gitterförmige Anschläge für axiale Bewegungen angeordnet sind.

Darüber hinaus ist es aus der nicht vorveröffentlichten EP-A-0154828 bekannt, eine solche Membran mit verdicktem Mittelteil und einem verdickten Umfangsrand über den Rand übergreifende Stege zu haltern, um damit Anschlaggeräusche zu vermeiden. Durch das verstärkte Mittelteil ist diese Membran selbst dabei relativ starr, so daß Durchbiegungen in vertikaler Richtung praktisch nicht möglich sind.

Bei speziellen Anwendungen in Kraftfahrzeugen ist es jedoch erforderlich, die dynamische Steifigkeit im Bereich der Leerlaufdrehzahl möglichst niedrig zu halten, bei größeren Erregeramplituden und geringeren Frequenzen jedoch viel Dämpfung zu erzeugen. Das bedeutet also, ein hydraulisch gedämpftes Motorlager mit Frequenzentkopplung zu schaffen, bei dem bei kleinen Erregeramplituden (in der Größenordnung von ca. 0,1 mm) die hydraulische Funktion im unteren Frequenzbereich praktisch entkoppelt ist, d.h. ein Lager, das sowohl frequenz- als auch amplitudenentkoppelt ist.

Zur Lösung dieser Aufgabe ist, ausgehend vom eingangs genannten Stand der Technik, erfindungsgemäß vorgesehen, daß die Membranscheibe zur Mitte hin abnehmende Dicke aufweist und in der aufnehmenden Kammer uneingespannt mit axialem und radialem Freiweg geführt ist.

Durch diese freie Lagerung kann sich die Membranscheibe bei kleinen Amplituden mit der Flüssigkeit frei mitbewegen, ohne dieser einen nennenswerten Widerstand entgegenzusetzen. Darüber hinaus ist es durch die Ausgestaltung der Membranscheibe mit einer dünneren Mitte aber möglich, daß die Membranscheibe am Ende ihres jeweiligen axialen Freiweges und damit bei Anlage an die die Membranscheibe überdeckenden Gitter sich im mittleren Bereich nach der einen oder anderen Seite noch weiter auswölben und damit eingeleiteten Schwingungen folgen kann, so daß damit eine Entkopplung bis zu höheren Amplituden möglich ist.

Zweckmäßigerweise beträgt der axiale und radiale Freiweg etwa 0,2 bis 2,0 mm.

Um im höheren Frequenzbereich eine bessere Frequenzentkopplung zu ermöglichen, muß die Membranscheibe auf eine entsprechende Steifigkeit eingestellt sein. Dazu ist neben einer Ausbildung zur Mitte hin abnehmender Dicke es ferner von Vorteil, wenn die Membranscheibe auf mindestens einer ihrer Stirnseiten vom Mittelpunkt sich radial nach außen erstreckende Rippen veränderlicher Dicke aufweist. Darüber hinaus ist es möglich, daß die Membranscheibe eine starre, zentrale Tilgermasse umschließt, um damit eine bestimmte Entkopplungsfrequenz leichter abstimmen zu können.

Anhand einer schematischen Zeichnung sind Aufbau und Wirkungsweise eines Ausführungsbeispiels nach der Erfindung näher erläutert. Dabei zeigen:

Fig. 1    einen Längsschnit durch ein Zweikammer-Motorlager,

Fig. 2    eine Aufsicht auf eine Membranscheibe,

Fig. 3    einen Querschnitt durch eine Membranscheibe mit einer eingesetzten Tilgermasse,

Fig. 4    ein Diagramm für die dynamische Steifigkeit eines derartigen Lagers für den Frequenzbereich bis 60 Hz,

Fig. 5    den Verlauf der Dämpfung für dieses Lager bei unterschiedlichen Amplituden und

Fig. 6    die dynamische Steifigkeit dieses Lagers für Frequenzen zwischen 60 und 260 Hz.

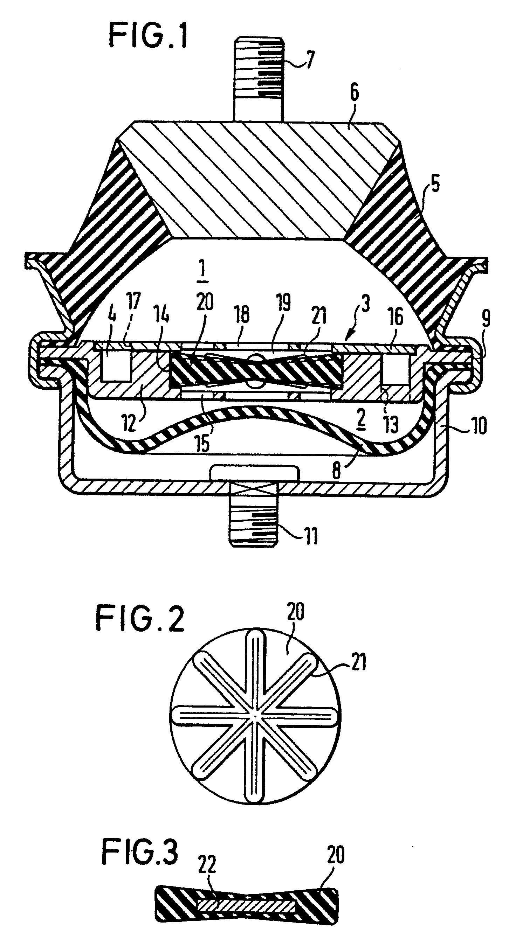

Wie aus Fig. 1 zu ersehen ist, weist das Zweikammer-Motorlager zunächst in herkömmlicher Weise eine obere, motorseitige Kammer 1 und eine untere Kammer 2 auf, die über einen, in einer Zwischenplatte 3 verlaufenden Kanal 4 miteinander in Verbindung stehen. Die obere Kammer 1 wird von einer starkwandigen, hohlkegelförmigen Kammerwandung 5, der sogenannten Tragfeder begrenzt, die an der oberen Stirnseite eine Lagerplatte 6 mit einem Bolzen 7 zur Festlegung am nicht näher dargestellten Motor aufweist. Die untere Kammer 2 ist von einer beispielsweise tassenförmigen Kammerwandung 8 aus ebenfalls gummielastischem, jedoch weicherem Material als das der Kammerwandung 5 gebildet, da die Kammer 2 praktisch nur als Ausgleichskammer fungiert. Alle Lagerteile sind über einen umlaufenden Ringflansch 9 flüssigkeitsdicht verspannt, wobei der Ringflansch 9 gleichzeitig den unteren Gehäusedeckel 10 mit einem Anschlußbolzen 11 zur Festlegung des Lagers an der Fahrzeugkarosserie mit erfaßt.

Nach dem dargestellten Ausführungsbeispiel besteht die Zwischenplatte 3 aus einer Bodenplatte 12, in die der ringförmige Verbindungskanal 4 mit einer Durchtrittsöffnung 13 zur Unterseite eingeschnitten ist. Darüberhinaus weist die Bodenplatte 12 eine zentrale, zylindrische Ausnehmung 14 auf, deren Unterseite mit Durchbrüchen 15 versehen ist. Die in die Bodenplatte 12 eingeschnittenen Ausnehmungen 4 und 14 können dann durch eine zentrisch aufgesetzte Deckplatte 16 verschlossen werden, wobei diese Deckplatte 16 eine Öffnung 17 als Verbindung vom Ringkanal 4 zur oberen Kammer 1 und Durchbrüche 18 oberhalb der Ausnehmung 14 aufweist.

In die somit durch die Ausnehmung 14 gebildete Kammer 19 ist nunmehr eine kreiszylindrische Membranscheibe 20 aus gummielastischem Material eingesetzt. Diese Membranscheibe 20 ist dabei nicht größer als die Ausnehmung 14 in Breite und Höhe, wobei der Weg größter Nachgiebigkeit in vertikaler und radialer Richtung je nach Anwendung im Bereich 0,2 - 2 mm liegt.

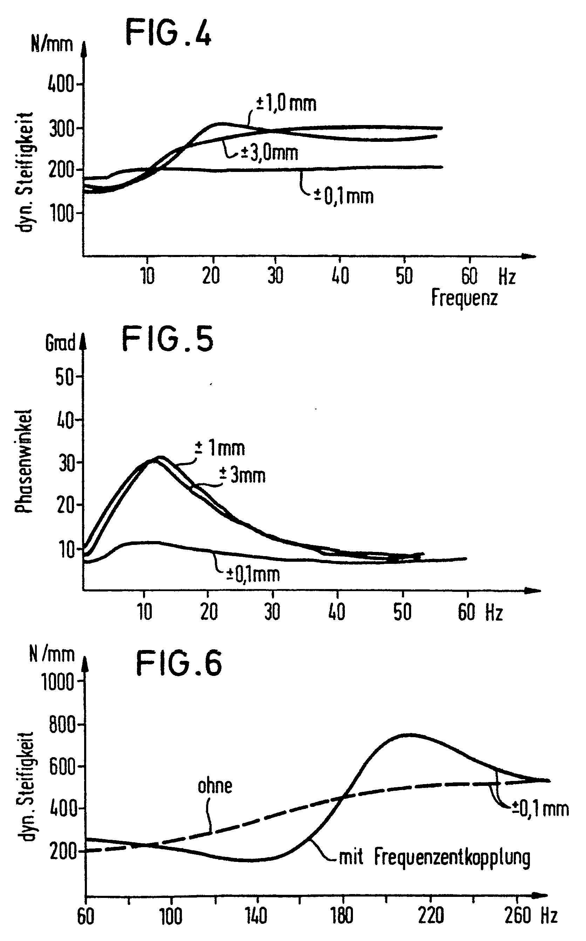

Bei Schwingungen mit kleinen Erregeramplituden in der Größenordnung von 0,1 mm kann diese Membran 20 somit den Flüssigkeitsbewegungen frei folgen, ohne diesen einen Widerstand entgegenzusetzen. Dadurch ist das Lager in seiner hydraulischen Funktion bis zu bestimmten Amplituden entkoppelt. Wie man dazu aus dem Diagramm nach Fig. 4 ersieht, in dem die dynamische Steifigkeit über einer Frequenz bis 60 Hz aufgetragen ist, kann durch diese Entkopplung die dynamische Steifigkeit bei kleinen Amplituden sehr niedrig gehalten werden. Dies ist insbesondere im Bereich der Leerlaufdrehzahl zwischen üblicherweise 20 und 30 Hz zweckmäßig, um damit eine Geräuschübertragung vom Motor auf die Karosserie weitgehend zu unterbinden.

Wie man darüberhinaus aus dem Diagramm nach Fig. 5 ersieht, in dem der Phasenwinkel zwischen der Anregung und der übertragenen Kraft über der Frequenz aufgetragen ist, tritt daher auch hier bei einer kleinen Amplidute von ca. 0,1 mm nur ein im Vergleich zu den größeren Amplituden geringer Phasenwinkel im relevanten Frequenzbereich auf.

Die maßgebenden Parameter für die Frequenz- und Amplitudenentkopplung sind dabei einmal der Weg größter Nachgiebigkeit und zum anderen die wirksame Fläche der Membran, die jeweils auf die zu erreichenden Werte eingestellt werden können.

Um darüberhinaus im höheren Frequenzbereich eine Frequenzentkopplung zu erreichen, ist es zweckmäßig, die Membran 20 - wie in Fig. 1 gezeigt - zur Mitte hin mit abnehmender Dicke auszuführen. Durch eine derartige Gestaltung legt sich der umlaufende dickere Rand der Membranscheibe 20 am Außenumfang an, während das dünnere Mittelteil der Membran 20 frei schwingt und damit die dynamische Steifigkeit im höherfrequenten Bereich beeinflußt.

In Fig. 6 ist dazu die dynamische Steifigkeit für den Frequenzbereich von 60 bis 260 Hz aufgetragen. Daraus ergibt sich, daß bei einer entsprechenden Anordnung und Gestaltung der Membran 20 bei der vorgesehenen Frequenzentkopplung die dynamische Steifigkeit in dem durch den vorgegebenen Anwendungsfall bestimmten Frequenzbereich erheblich geringer ist, als das ohne eine derartige Frequenzentkopplung der Fall wäre. Zur zusätzlichen Steifigkeitseinstellung der Membran ist es darüberhinaus noch zweckmäßig - wie aus der Aufsicht nach Fig. 2 zu ersehen ist - die Membranscheibe 20 mit vom Mittelpunkt radial nach außen erstreckenden Rippen 21 unterschiedlicher Dicke zu versehen. Damit kann partiell die Durchbiegung und die Schwingung des Mittelteils der Membran begrenzt werden.

Zur weitergehenden Abstimmung kann entsprechend Fig. 3 die Membranscheibe 20 noch eine zentrale starre Masse 22 in Form einer Metallscheibe aufweisen, wodurch Masse und Steifigkeit der Membran beeinflußbar sind.

Insgesamt kann durch entsprechende Auswahl und Einstellung der Parameter Steifigkeit, Massenbelegung und Geometrie der Membran die Entkopplungsfrequenz im Bereich zwischen 60 und 300 Hz abgestimmt werden.

**Patentansprüche**

1. Zweikammer-Motorlager mit hydraulischer Dämpfung, dessen mit einer Flüssigkeit gefüllten und gummielastische Umfangswände (5, 8) aufweisenden Kammern (1, 2) über einen, in einer starren Zwischenplatte (3) angeordneten Kanal (4) miteinander in Verbindung stehen und bei dem die Zwischenplatte (3) eine beiderseits von Flüssigkeit beaufschlagte und parallel zur Richtung eingeleiteter Schwingungen bewegliche Membranscheibe (20) aus gummielastischem Material kammerartig umschließt, dadurch gekennzeichnet, daß die Membranscheibe (20) zur Mitte hin abnehmende Dicke aufweist und in der sie aufnehmenden Kammer (19) uneingespannt mit axialem und radialem Freiweg geführt ist.

2. Zweikammer-Motorlager nach Anspruch 1, dadurch gekennzeichnet, daß die Membranscheibe (20) auf mindestens einer ihrer Stirnseiten vom Mittelpunkt sich radial nach außen erstreckende Rippen (21) veränderlicher Dicke aufweist.

3. Zweikammer-Motorlager nach Anspruch 1 oder 2, dadurch gekennzeichnet, daß der axiale und radiale Freiweg etwa 0,2 bis 2,0 mm beträgt.

4. Zweikammer-Motorlager nach Anspruch 1 oder 2, dadurch gekennzeichnet, daß die Membranscheibe (20) eine starre, zentrale Tilgermasse (22) umschließt.

## Claims

1. Two-chamber hydraulically damped engine mount whose chambers (1, 2), which are filled with a fluid and comprise elastomeric circumferential walls (5, 8), are connected together via a channel (4), which is arranged in a rigid intermediate plate (3), the latter enclosing like a chamber a diaphragm disc (20) of an elastomeric material which is acted upon by fluid on both sides and can move parallel to the direction of induced vibrations, characterised in that the diaphragm disc (20) becomes thinner towards the centre and is arranged in an unfixed state in the chamber (19) which holds it with axial and radial free travel.

2. Two-chamber engine mount according to claim 1, characterised in that the diaphragm disc (20) comprises ribs (21) of a variable thickness which extend radially outwards from the central point at least at one of its end faces.

3. Two-chamber engine mount according to claim 1 or 2, characterised in that the axial and radial free travel is approximately 0.2 to 2.0 mm.

4. Two-chamber engine mount according to claim 1 or 2, characterised in that the diaphragm disc (20) comprises a rigid, central absorbing mass (22).

## Revendications

1. Support de moteur à deux chambres et à amortissement hydraulique, dont les chambres (1, 2), emplies de liquide et comportant des parois périphériques (5, 8) ayant l'élasticité du caoutchouc, communiquent entre elles par un canal (4) ménagé dans un plateau intermédiaire (3) rigide et dans lequel le plateau intermédiaire (3) enferme comme en une chambre une membrane (20) en forme de disque, qui est en une matière ayant l'élasticité du caoutchouc, sur les deux côtés de laquelle s'applique du liquide et qui est mobile parallèlement à la direction d'oscillations provoquées, caractérisé en ce que la membrane (20) présente une épaisseur décroissante vers le centre et est guidée, sans être bloquée et avec une course libre axiale et radiale, dans la chambre (19) qui la reçoit.

2. Support de moteur à deux chambres suivant la revendication 1, caractérisé en ce que la membrane (20) comporte, sur au moins l'un de ses côtés frontaux, des nervures (21) d'épaisseur variable s'étendant radialement vers l'extérieur à partir du centre.

3. Support de moteur à deux chambres suivant la revendication 1 ou 2, caractérisé en ce que la course libre dans le sens axial et radial est de 0,2 à 2,0 mm environ.

4. Support de moteur à deux chambres suivant la revendication 1 ou 2, caractérisé en ce que la membrane (20) enferme une masselotte d'amortissement (22) centrale qui est rigide.

FIG.1

FIG.2

FIG.3

## FIG.4

N/mm

dyn. Steifigkeit

400

300 ±1,0 mm

±3,0mm

200

±0,1mm

100

10 20 30 40 50 60 Hz

Frequenz

## FIG.5

Grad

Phasenwinkel

50

40

30 ±1mm

±3mm

20

10

±0,1mm

10 20 30 40 50 60 Hz

## FIG.6

N/mm

dyn. Steifigkeit

1000

800

600

ohne

400 ±0,1 mm

200

mit Frequenzentkopplung

60 100 140 180 220 260 Hz